# EUROPEAN PATENT SPECIFICATION

(11) **EP 3 391 276 B1**
(45) Date of publication and mention of the grant of the patent: **01.02.2023**
(21) Application number: 16812931.0
(22) Date of filing: 13.12.2016
(51) Int. Cl.: G06F 21/57

(54) **HARDWARE INTEGRITY CHECK**
HARDWARE-INTEGRITÄTSPRÜFUNG
CONTRÔLE D'INTÉGRITÉ DE MATÉRIEL

(30) Priority: 16.12.2015 GB 201522244
(43) Date of publication of application: 24.10.2018
(73) Proprietor: Nagravision Sàrl, 1033 Cheseaux-sur-Lausanne (CH)
(72) Inventor: FORLER, Edouard, 1033 Cheseaux-sur-Lausanne (CH); BORGEAUD, Jonathan, 1033 Cheseaux-sur-Lausanne (CH); SELTZER, Steven, 1033 Cheseaux-sur-Lausanne (CH)
(74) Representative: Ipside
(86) International application number: PCT/EP2016/080859
(87) International publication number: WO 2017/102766

(56) References cited:
- US-A1- 2004 064 457
- US-A1- 2005 289 343
- US-A1- 2010 115 625
- US-A1- 2014 108 786

## Description

The present invention relates to the detection of hardware tampering and verifying the physical integrity of a data processing device, in particular to facilitate guarding against hardware modification and detecting modifications of hardware components in the device.

### BACKGROUND

At present, most attacks aiming to hijack digital devices focus on software but as the robustness of secure software will continue to increase, attacks will increasingly focus on hardware. Attacks based on hardware tampering by removing, adding or swapping one or more integrated circuits or other hardware components in a device or emulating such hardware components with an external device are known. It will therefore be increasingly important to verify device integrity at a hardware level. This is particularly the case where the integrity of the device is crucial to protect revenue streams, such as in conditional access systems, for example in television set-top boxes, or digital rights management, but also in all general purpose computing platforms such as personal computers and portable devices such as laptops, mobile phones, smart phones, tablets, etc, which are increasingly used for sensitive applications including privacy and security concerns, such as electronic banking or e-health. With the increasing connectivity of almost all everyday devices (internet of things), the need for hardware integrity checks will become pervasive.

Several solutions that ensure integrity of software in a data processing system are known and include various approaches, for example creating signatures of software components by storing a hash of each software component and comparing a hash created from each software component on system start-up. Such solutions are sometimes facilitated by dedicated security hardware, such as the Trusted Platform Module (TPM) developed by the Trusted Computing Group (TGC). In TCG's Trusted Network Connect (TNC) architecture, the TPM is used for integrity measurement and remote attestation. During the boot process, the TPM measures (hashes) all the critical software and firmware components of a PC, including the BIOS, boot loader, and operating system kernel, before they are loaded. By making these measurements before the software runs and storing them on the TPM, the measurements are isolated and secure from subsequent modification attempts. When the PC connects to the network, the stored measurements are sent to a TNC server, checked against the server's list of acceptable configurations, and quarantined as an infected endpoint if a non-match occurs.

The patent document US 2004/064457 A1 discloses a secure platform and corresponding authentication methods. The patent document US 2010/115625 A1 discloses a trusted entity and associated methods operable in a trusted computing platform. The patent document US 2014/108786 A1 discloses techniques for improving the tamper-resistibility of hardware that may be used in a transaction system. The patent document US 2005/289343 A1 discloses techniques for binding a hardware component and a platform through the registration of cryptographic keys between the hardware component and the platform.

### SUMMARY

Aspects of the disclosure are set out in the independent claims. Some optional features of disclosed embodiments are set out in the dependent claims.

In some aspects of the disclosure, a data processing device according to claim 1 is proposed.

In some embodiments, the device is configured to generate a device verification key based on the response(s) produced by the at least one remaining hardware component, the device verification key being useable to verify the integrity of the data processing device. For example, the first hardware component may receive one or more responses, generate the device verification key and verify or otherwise use it, or these tasks may be carried out by different hardware components in the device. For example the first hardware component may send information about one or more responses to a second hardware component generating the device verification key using the received information and decrypting the mission critical information or sending the device verification key to a third hardware component, which decrypts the mission critical information. One or more device verification keys may be generated based on the collective response of the hardware component or hardware components and the device verification key or keys may simply be the response or responses by the hardware component(s).

In some embodiments, the device comprises a memory storing mission critical information in encrypted form. Mission critical information is required by the device or an aspect of the device in decrypted form to function. The device may use one or more device verification keys based on response(s) produced by the remaining hardware component(s) to decrypt the encrypted mission critical information (either by the hardware component generating the one or more device verification keys or another hardware component receiving the one or more device verification keys from that hardware component). Thus, device clarification may be implicit in the success (or failure) to decrypt the mission critical information). The one or more device verification keys may be generated based on the response(s) or may simply be the response(s). In the case of more than one remaining hardware component, for example, one or more of the responses may be used as the device verification key or keys, depending for example on whether the responses are generated independently or in a chain with each response depending on previous responses. In general, thus, the collective response of the remaining hardware component(s), for example the individual responses or one or more of the responses depending on the remaining individual responses, may be used to decrypt the mission critical information. Advantageously, by using the response of the remaining hardware component(s) to decrypt mission critical information required by the device (or an aspect of it) to function, an attack on the device that would attempt to merely circumvent device verification would fail. Since the response is used to decrypt mission critical information, rather than just for a check against one or more expected values, circumventing the verification step would leave the device non-functional in the absence of the mission critical information.

An example of mission critical information is firmware (or other software) required for the device or an aspect of the device to function. For example, the mission critical information may comprise one or more of a BIOS, an operating system kernel, a hardware component driver, a boot loader, a content decryption key. In one specific example, the data processing device comprises a conditional access device and the mission critical information comprises a decryption key for use by conditional access device to control access to content consumable using the data processing device. In another specific example, the data processing device comprises a video descrambler and the mission critical information comprises a descrambling key for use by the video descrambler to descramble a video signal.

In some embodiments, an initial remaining hardware component is configured to receive its challenge from the first hardware component and the challenge received by each subsequent remaining hardware component is the response produced by a respective preceding remaining hardware component. For example, each subsequent remaining hardware component may receive the response produced by its preceding hardware component directly from the preceding hardware component or the preceding hardware component may send its response to the first or another hardware component, which then sends it to the subsequent hardware component. A last one of the remaining hardware components is configured to send its response to the first hardware component, directly or via an intermediate hardware component. The device may be configured to generate the device verification key using the response received from the last one of the remaining hardware components, at the first or another hardware component, as described above. The response received may be used directly as the device verification key.

In embodiments where each subsequent remaining hardware component receives as its challenge the response from the preceding hardware component directly from the preceding hardware component, communication is simplified in that responses / challenges are routed between the hardware components in question rather than having to be routed back and forth with the involvement of a first hardware component or other communication hub.

Each of the remaining hardware components may be configured to apply a non-transitive function to a received challenge to produce its response. Advantageously, in embodiments in which the challenge for a subsequent hardware component is the response from the preceding hardware component, using a non-transitive response function makes the overall response sensitive to the order in which the challenge is passed from hardware component to hardware component, so that a correct last response or generated device verification key verifies not only the individual hardware components but also the order of their arrangement in the verification chain.

The hardware components may be connected in various configurations using various means. In some embodiments, the hardware components interconnect using a bus, for example an I2C bus. In some embodiments, the hardware components may be interconnected using dedicated physical connections, for example each remaining hardware component being connected to the first hardware component by a dedicated physical line over which the first hardware component can write to and read from the remaining hardware components.

These embodiments employ a daisy chain physical connection model but can support sending individual challenges to each remaining hardware component and receiving individual responses at the first hardware component by causing all but the "active" remaining hardware component receiving a challenge and providing a response to merely pass through the challenge (upstream of the "active" hardware component) and response (downstream of the "active" hardware component).

As with any of the physical connection schemes discussed here, the individual challenges may be the same or different for each remaining hardware component, may be specific to each remaining hardware component or may be (or be determined by) a response previously received by the first hardware component. The challenges may be fixed or vary over time. Of course, the physical connection chain, in some embodiments, also facilitates a logical chain where each response is passed directly from a preceding hardware component to a subsequent hardware component as the challenge for the subsequent hardware component. The one or more responses received by the first hardware component may be used by the device for device integrity verification as described above, for example by the first hardware component or one or more different hardware components of the device receiving information about the one or more responses as received by the first hardware component.

Each remaining hardware component in the chain may implement an infrastructure similar to the IEEE Standard1149.1 (JTAG) specification. See IEEE Standard 1149.1-2013 or any previously published version. Specifically, each remaining hardware component may have an instruction shift register for receiving an instruction of a set of instructions. The set of instructions may include at least a process challenge instruction to process a challenge and produce a response. Each remaining hardware component may further have a data shift register that corresponds to the process challenge instruction, for receiving a challenge. Each remaining hardware component may be configured to implement a number of modes. For example, each of these modes may be implemented using states of a JTAG-like state machine.

It will be understood that the term "shift register" is used herein to cover any implementation of a data register or store in which bits are shifted in one side of the register (e.g. least significant bit) and shifted out on the other (e.g., most significant bit) on a first-in-first-out basis, whether implemented as a physical register of digital electronic circuitry, such as flip-flops, by general purpose digital logic or otherwise. Likewise, a "shift register" as understood herein may have a parallel interface to the register for reading, writing or both. For example, in the context of a shift register used in the implementation of a JTAG Test Access Point (TAP), or similar implementations, the bits may be written / read in parallel inside the hardware component (for example an integrated circuit), for example in the select IR, select DR, update IR and/or update DR states of the TAP state machine.

Specifically, in a first mode, each remaining hardware component may be configured to shift one bit at a time from its input into the instruction shift register and from the instruction shift register to its output. In a second mode, each remaining hardware component may be configured to shift one bit at a time from its input into the data shift register and from the data shift register to its output. In a third mode, each remaining hardware component may be configured to, when a process challenge instruction is in in the instruction shift register, read the challenge in the data shift register, process the challenge to produce a response and write the response to the data shift register. The first hardware component may be configured to control the mode of all remaining hardware components together over a mode control line common to all remaining hardware components. That is all remaining hardware components may be controlled such that they are in the same mode at any one time.

The first hardware component may be configured to control the mode of the remaining hardware components to shift respective instructions into the instruction shift registers, shift challenges into the data shift registers, cause the remaining hardware components to process the challenges to produce responses and to shift responses out of the data shift registers, thereby receiving one or more responses from the remaining hardware components. In embodiments where challenges are supplied and response received individually a response is received at the first hardware component from each remaining hardware component. In embodiments where responses are passed from one remaining hardware component to the next as challenges, the first hardware component receives only a single response, from the last hardware component in the chain.

Some embodiments implement both a logical chain, passing a response from one remaining hardware component as a challenge to the next, and a physical chain, passing the response of one hardware component as the challenge directly to the next one over a physical communications line connecting the two remaining hardware components. Advantageously, implementing a physical and logical daisy chain of remaining hardware components in a JTAG like architecture, an efficient implementation for device verification is provided that uses relatively few instructions and can take advantage of existing infrastructure provided in most hardware components for testing purposes.

In some such embodiments, the first hardware component is configured to cause a challenge to be shifted bit by bit into the data shift register of the initial remaining hardware component, the initial remaining hardware component to process the challenge and write its response to its data shift register, the response from the data shift register of the respective preceding hardware component in the chain to be shifted bit by bit into the data shift register of each subsequent remaining hardware component in the chain, each subsequent hardware component to process the response from the respective preceding hardware component in its data shift register as its challenge to write its response to the data shift register and the response written to the respective data shift register of the last remaining hardware component in the chain to be shifted bit by bit to the input of the first hardware component.

The first hardware component may be configured to cause a process challenge instruction to be executed by each subsequent remaining hardware component in the chain not before the respective preceding hardware component in the chain has been caused to write its response to its data register. This may be implemented in some embodiments by using a combination of process challenge instructions and bypass instructions (which cause the remaining hardware component in question to pass through the signal from its input to its output). In other embodiments, a simpler set of instructions may be used. In particular, in some embodiments, a process challenge instruction is loaded into all instruction shift registers and the challenges and response then simply shifted from one hardware component to the next, data shift register width by data shift register width, with unwanted responses to intermediate invalid or irrelevant data simply discarded. However, in embodiments in which the process challenge instruction is only executed when the response from the preceding remaining hardware component has been loaded into the corresponding data shift register, the remaining hardware components are advantageously able to maintain an internal state so as only to produce a response once when the challenge is passed down the chain. This enables implementations where it is desirable that the challenge / response chain is executed only once after device start-up.

In some embodiments, the first hardware component is configured to cause each remaining hardware component in the chain to only execute a process challenge instruction once between shifting the challenge into the data shift register of the initial remaining hardware component in the chain and shifting the response written to the data shift register of the last remaining hardware component in the chain to the input of the first hardware component. By executing the challenge response instruction only once for each challenge / response chain, the remaining hardware components can each maintain an internal state as a function of processing the challenge, for example returning a different response for each challenge / response chain execution, such as providing a response that is a function of the current challenge and a response from a previous challenge / response chain execution. Advantageously, this enables each response to be made dependent on all previous challenges, for example to chain device verifications.

In some embodiments, a physical layer used for implementing communications between the first and remaining hardware components and between remaining hardware components is compliant with the IEEE Standard1149.1 (JTAG) specification, each remaining hardware component comprising a TMS, TCK, TDI and TDO pin and a specification compliant state machine and implementing at least the minimal instruction set required by the specification. The first hardware component may monitor the TDO pin of the last remaining hardware component, for example the first hardware component may have an input pin connected to the TDO pin of the last remaining hardware component.

Typically, a response is produced as a function of the challenge. In all aspects and embodiments, producing a response may comprise combining the challenge with a hardware component key associated with the remaining hardware component producing the response and, for example, applying a one-way function to the combination. The one-way function may be a cryptographic hash function. Processing a challenge to produce a response may comprise hashing the challenge together with the hardware component key. Hashing may be done using a cryptographic hash function, for example MD5, SHA-0, SHA-1, SHA-2 or SHA-3. hardware component. In general, the hardware components may each produce a response that is specific to the the specific make, type or version of the hardware component, or specific and unique to the individual hardware component. Typically, the response will also be specific to the challenge, i.e. two different challenges will elicit corresponding different responses from a hardware component. Further, the response may be dependent on an internal state of the hardware component, which in turn may depend on previous challenges.

### BRIEF DESCRIPTION OF THE DRAWINGS

Specific embodiments are now described by way of example with reference to the accompanying drawings in which:
Figure 1a, 1b and 1c illustrate data processing devices with a plurality of data processing hardware components interconnected for device verification using various connection schemes;
Figure 2 illustrates a method of device verification;
Figure 3 illustrates a method of device verification including decryption of encrypted mission critical information;
Figures 4a and 4b illustrate examples of the method of Figure 3;
Figure 5a and 5b illustrate a method based on individual challenge response pairs;
Figure 6 illustrates an implementation of the method of Figures 5a and 5b with data processing hardware components connected in a chain for device verification;
Figure 7 illustrates details of a chain connection scheme compliant with IEEE-1149.1;
Figure 8 illustrates states of the data processing hardware components in the chain during challenge response pair collection from the data processing hardware components;
Figure 9 illustrates a method based on a chain of challenge response pairs with a preceding response acting as a subsequent challenge, respectively at a first and each remaining hardware component;
Figure 10 illustrates an implementation of the method of Figures 9a and 9b with data processing hardware components connected in a chain for device verification;
Figure 11 illustrates states of the data processing hardware components in the chain during execution of challenge response pair chain using a single instruction;
Figure 12 illustrates states of the data processing hardware components in the chain during execution of challenge response pair chain using two instructions to enable data processing hardware components to be limited to producing a single challenge response pair; and
Figure 13 illustrates states of the data processing hardware components in the chain during execution of challenge response pair chain using three instructions to enable data processing hardware components to be limited to producing multiple challenge response pairs while maintaining an internal state related to each challenge response pair.

### SPECIFIC DESCRIPTION

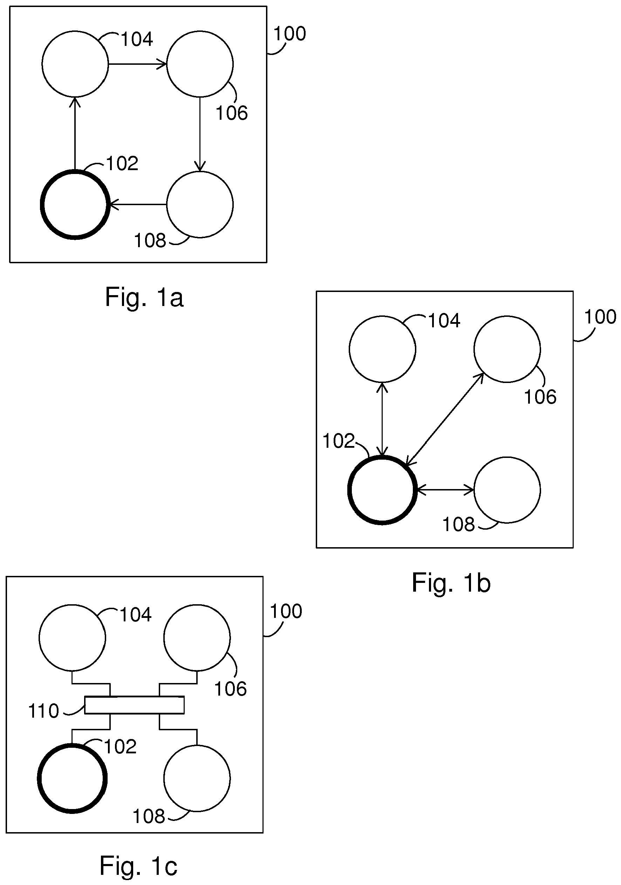

With reference to Figures 1A, 1B and 1C, a data-processing device 100 comprises a plurality of data processing hardware components 102, 104, 106, 108. The device 100 may be any device that processes data, for example a server; personal computer; mobile computing device like a smart phone or tablet; set-top box; smart TV; digital video recorder; camera; video camera; video recorder; media consumption, access or recording device; access control device for controlling a gate or door; toll gate; ski lift gate; control device; industrial process control device; electronic fitness or health device; connected household device; etc. Typically, the device 100 will have one or more input interfaces, such as a keyboard; card reader; RFID reader; camera; microphone; one or more connectors; a wired and/or wireless network connection; etc., and one or more output interfaces, such as a display; a loudspeaker; a printer; one or more connectors; a wired and/or wireless network connection; etc.

The hardware components 102. 104. 106 and 108 may be disposed in a common device enclosure or housing.

The hardware components will typically be or include integrated circuits or chips, for example a microprocessors, Central Processing Unit (CPU) or System-on-Chip (SoC). The hardware components typically have pins to receive inputs and present outputs and are typically interconnected by conductors, for example conductive traces on a circuit board, wires, etc. One of the hardware components may, for the purpose of device verification, act like a master hardware component 102 to drive communications with remaining hardware components, with the remaining hardware components acting like slave hardware components 104, 106, 108 receiving and responding to signals from hardware component 102. The hardware components 102, 104, 106 and 108 are, in some embodiments, arranged in a chain with challenges and/or responses passed from one hardware component to do next (see Figure 1A), as will be described in more detail below. With reference to Figures 1B, in other embodiments, the hardware components 104, 106 and 108 communicate with the hardware component 102 over dedicated bidirectional connections between the hardware component 102 and each of the hardware components 104, 106 and 108. In some embodiments, the hardware components102, 104, 106 and 108 communicate over a bus 110 (see Figure 1C). In some embodiments, the bus 110 is an I2C bus and the hardware component 102 acts as a master on the I2C bus, reading and writing to and from the hardware components 104, 106 and 108 to elicit and collect responses for device verification.

In some embodiments, the hardware component 102 is a hardware component that executes a boot loader for the data-processing device 100, for example a CPU or SoC. However, in other embodiments, the hardware component 102 can be any hardware component in the device 100 configured to elicit and collect responses. In the example of the data-processing device 100 implementing a set-top box, the remaining hardware components 104, 106 and 108 may be a conditional access module, a video descrambler and a communications interface, for example. It will, of course, be appreciated that embodiments are not limited to four hardware components (one hardware component initiating in the challenge and three hardware components responding) but could include any number of hardware components, for example two hardware components (one initiating hardware component, one responding hardware component), three hardware components (one initiating hardware component, two responding hardware components) or any number of hardware components larger than four.

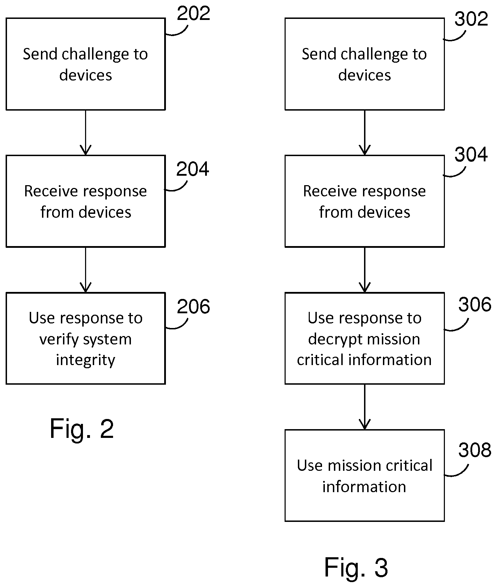

With reference to Figure 2, the data-processing device 100 is configured to send challenges to the hardware components in the device 100 at step 202, to receive a response from the hardware components at step 204 and to use the response to verify device integrity at step 206. Verification of device integrity may be done in a number of ways, for example by comparing the response to an expected response. The response of the hardware components may be the set of responses from each hardware component, a response from a last hardware component in a chain of responses, each response depending on the previous response(s) (as described in detail below) and/or a derived quantity such as one or more device verification keys derived from the response or responses.

With reference to Figures 3, in some embodiments, the device 100 is configured to send challenges to the hardware components in the device 100 at step 302, to receive a response from the hardware components at step 304 and to use the response to decrypt mission-critical information at step 306. Mission-critical information is information that is stored in the device 100 in encrypted form but is needed in decrypted form for the device 100 or an aspect of the device 100 to function. At step 308, the device uses the mission-critical information for device initialisation, device operation or an aspect of device initialisation or operation. In case of an incorrect response from the hardware components, for example where one or more of the hardware components have been tampered with, the mission-critical information will not decrypt correctly at step 306 and, consequently, step 308 will fail. Thus, step 308 can only be carried out if the hardware components have provided the correct response.

Throughout this description, a challenge will be understood to mean any item of data, for example a number, an alphanumeric string, a sequence of bits, in any appropriate format or base, which is transmitted from one hardware component to another hardware component to elicit a response by the other hardware component, typically as a function of the challenge. The response may be produced by, for example, combining, for example concatenating , the challenge with a hardware component key specific to the hardware component and passing the result through a hash function, for example MD5, SHA-1, SHA-2 or SHA-3.

Verification of whether the response is as expected based on knowledge about how the response is produced by a valid, non-tampered hardware component enables verification of the integrity of the hardware component. The response expected for valid hardware components may be determined based on prior knowledge of the response behaviour of each hardware component, or may be established during a set-up phase as part of the manufacturing process, where the one or more challenges are sent to the hardware components, the response(s) observed and an expected response (or information allowing its verification, such as a hash) may be recorded, typically in a one-time write physical memory in a secure part of the device 100, for example in the hardware component 102.

As described above, in some embodiments, the actual response is compared to an expected response for system verification, while in some embodiment the expected response is used to encrypt mission critical information. In the former case, the responses can be compared using respective hashes, reducing the risk of discovery of the expected response by only storing a hash of the response in the device. Specifically, a hash of the expected response can be stored and compared with a hash of the actual response can be compared to avoid storing the expected response. In the latter case, the mission critical information can be encrypted once during manufacture or set-up of the device, using the expected response, and stored in encrypted form. As a result, the expected response need not be stored in the device 100, removing a possible avenue for attack. Alternatively, the expected response may be stored if it is necessary to update the mission critical information from time to time. Thus, a (collective) response or individual responses from a plurality of hardware components in a device can be used to verify the integrity of the plurality of hardware components/the device in various ways.

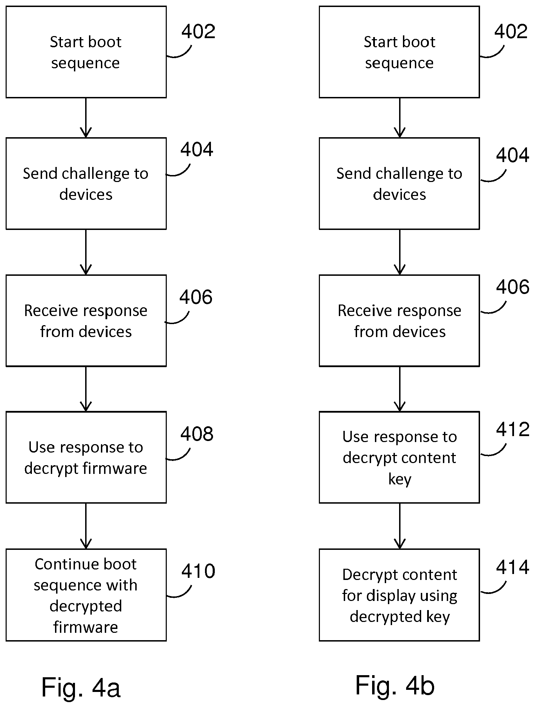

Some embodiments, in which the boot sequence of the data-processing device 100 loads firmware, are now described with reference to Figure 4A. In some of these embodiments, the hardware component 102 starts and executes a boot sequence at step 402. As part of the boot sequence, the hardware component 102 sends a challenge to the hardware components 104, 106 and 108 at step 404 receives a response at step 406. For example, the hardware component 102 sends a challenge to the hardware component 104, which returns a response to the hardware component 102. This is then repeated for hardware components 106 and 108. The challenge for hardware components 106 and 108 may be the previously received response (that is the response from hardware component 104 and 106, respectively) or maybe the same or a different independent challenge for each hardware component. Alternatively, hardware component 104 may send its response to hardware component 106 as a challenge, with hardware component 106 sending its response to hardware component 108 as a challenge and hardware component 108 returning its response to hardware component 102. This will be described in further detail below.

At step 408, the hardware component 102 uses the response to decrypt encrypted firmware and then continues the boot sequence with the decrypted firmware at step 410. It will, of course, be understood that the hardware component managing the challenge response part of the device verification need not be the same hardware component as the hardware component making use of the response (in these embodiments for decryption of the firmware) and subsequently using the mission-critical information (in these embodiments continuing the boot sequence with the decrypted firmware). Managing the challenge response part, using the response and using the decrypt mission-critical information may, in dependence upon the specific embodiment and requirements, be carried out at the same, single hardware component, at respective hardware components for each task or may be distributed in any suitable way between any number of hardware components.

Some embodiments, in which a conditional access module of the data-processing device 100 requires a content key to decrypt content to allow it to be presented to a user, are now described with reference to Figure 4B. Steps 402 to 406 are the same as described above with reference to figure 4A. At step 412, the hardware component 102 (or more generally the device 100) uses the response to decrypt the content key and, at step 414, uses the decrypted content key to decrypt encrypted content for display.

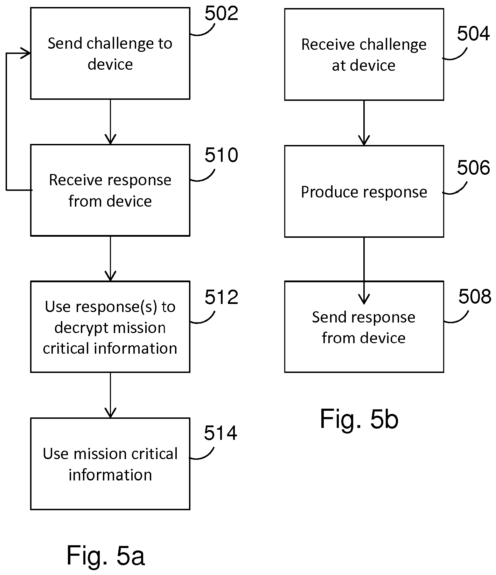

Some embodiments, in which the hardware component 102 sends a challenge and receives a response from each hardware component 104, 106 and 108 are now described with reference to Figure 5A and Figure 5B. At step 502, the hardware component 102 sends a challenge to one of the other hardware components 104, 106, 108. The challenge is received at the other hardware component at step 504, which produces a response at step 506.

At step 508, the other hardware component returns the response to hardware component 102, which receives it at step 510. Steps 502 to 510 are repeated until all responses have been received by hardware component 102. As mentioned above, it will be appreciated that the challenges may be independent of each other, so that the responses are independent of each other and used collectively to verify device integrity (in which case the challenges may be sent out and the responses received interleaved or in parallel), or all but the first challenge maybe the response received from the previous hardware component (or derived from that response), so that only the response from the last hardware component to be challenged may be used for device verification.

At step 512, the hardware component 102 uses the response or responses to decrypt mission-critical information, for example by generating a device verification key from the response or responses, and uses the mission-critical information at step 514, as described above. It will be appreciated that steps 512 and 514 may be replaced with any steps that make use of the response or responses to verify device integrity.

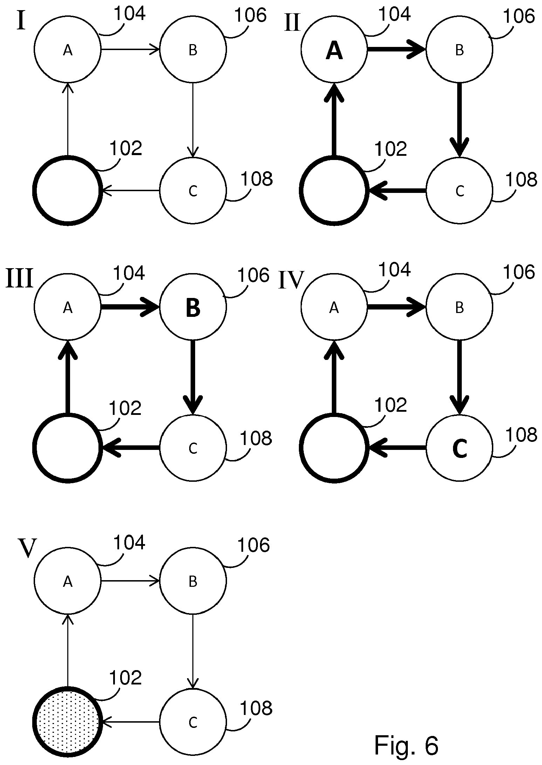

The process described above with reference to Figures 5A and 5B can be implemented in any of the architectures described above with reference to Figures 1A, 1B and 1C. A specific embodiment implementing this process with a chained connection arrangement described above with reference to Figure 1A is now described with reference to Figure 6. The hardware component 102 acts as a master and each of the hardware components 104, 106 and 108, connected to form a chain starting at a hardware component 102 and ending at hardware component 102, implement a respective response function A, B, C (I).

Hardware component 102 transmits a challenge to hardware component 104, which applies the response function A to the challenge. The response is then sent back to hardware component 102 via hardware components 104 and 106, which simply pass through the response (II). Then, hardware component 102 sends a challenge to hardware component 106 via hardware component 104, which passes the challenge through. Hardware component 106 applies the response function B to the challenge and the response is transmitted back to hardware component 102 via hardware component 108, which passes the response through (III). In a similar fashion, hardware component 108 receives a challenge, passed through hardware components 104 and 106, and the response produced by hardware component 108 by applying response function C is transmitted back to hardware component 102 (IV). Hardware component 102 then uses the responses (or the last response, as the case may be) to verify device integrity as described above (V). The response functions, in some embodiments, combine their input (challenge) with a hardware component specific key and produce a hash of the combination, or otherwise produce a response, as described above.

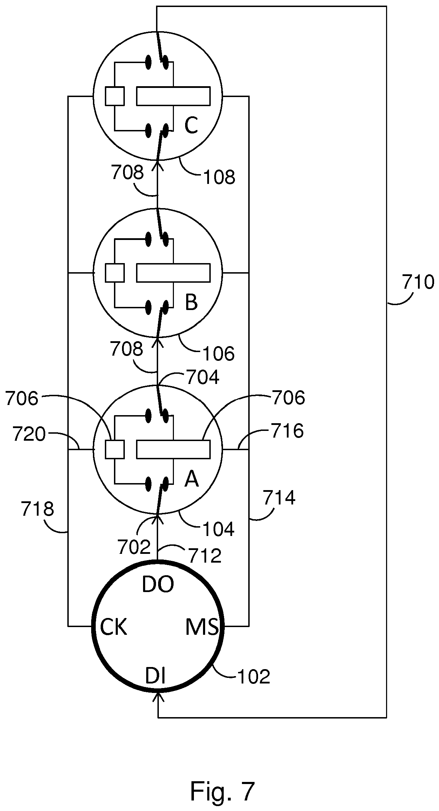

Various physical layers and protocols can be employed to implement a chained arrangement as just described, an example of which is specified in IEEE Standard1149.1. A specific embodiment which may be implemented using the IEEE Standard1149.1 specification is now described with reference to Figure 7.

With reference to Figure 7, each of the hardware components 104, 106 and 108 has an input pin 702, an output pin 704 and a plurality of shift registers 706 connectable between the input and output pins 702, 704. The input pin 702 of each subsequent hardware component, for example hardware component 106, is connected to the output pin 704 of each preceding hardware component in the chain, for example hardware component 104, by a data line (a conductor) 708. The output pin of the last hardware component, 108, in the chain is connected to a data input I of hardware component 102 by a data line 710. The input of the initial hardware component, hardware component 104, is connected to a data output O of the hardware component 102 via a data line 712.

Each hardware component 104, 106 and 108 has a number of modes, including a first mode in which the hardware component 102 can load instructions into an instruction shift register (not shown) of each hardware component. Hardware component 102 is configured to do so by shifting bits from its output O towards its input I via the pins 702 and 704 of the hardware components 104, 106 and 108 and the respective instruction shift registers. In a second mode, the hardware component 102 can load data, in particular a challenge, into a data shift register associated with a currently loaded instruction in each hardware component 104, 106, 108. Hardware component 102 is configured to do so by shifting bits from its output O towards its input I via pins 702 and 704 of the hardware components 104, 106 and 108 and the respective data shift registers. Thus, an instruction loaded into the instruction shift register in the first mode acts like a switch determining which data shift register data is shifted through in the second mode. It will be appreciated that, as data gets shifted into the data shift register of hardware component 104, the data previously in the data shift register of hardware component 104 progressively gets shifted into the data shift register of hardware component 106 and so forth, with the data in the data shift register of the hardware component 108 getting shifted out of the data shift register of the hardware component 108 and back to the input I of the hardware component 102. In a third mode, each hardware component 104, 106 and 108 is caused to process the data in its respective data shift register to produce a response and write the response back into the data shift register.

The shifting of bits and changing of modes at each hardware component 104, 106 and 108 is controlled by the hardware component 102 by a signal at a mode select pin MS of the hardware component 102 connected by a mode select line 712 to respective mode select pins 714 of hardware components 104, 106 and 108. The modes of the hardware components 104, 106 and 108 are controlled by means of a state machine, with state transitions being determined by the value at the mode select pin MS clocked by a clock signal (at the leading and/or falling edge) at a clock pin CK connected by a clock line 716 to respective clock pins 718 of hardware components 104, 106 and 108.

In some embodiments, the hardware components 104, 106 and 108 implement the IEEE Standard 1149.1 specification and hardware component 102, acting as a master, provides at its MS and CK pins the TMS and TCK signals specified by IEEE Standard1149.1 for the hardware components 104, 106, 108 and pins 714 and 718 of the hardware components 104, 106, and 108 are, respectively, TMS and TCK pins in accordance with IEEE-1149.1. Further, in these embodiments, hardware component 102 connects to the TDI pin 702 specified by IEEE Standard1149.1 of hardware component 104 (the initial hardware component in the chain) with its O pin and to the TDO pin 704 specified by IEEE Standard1149.1 of hardware component 108 (the last hardware component in the chain) with its I pin to receive data back from the chain. In these implementations, each hardware component implements the minimum instruction set required by IEEE Standard1149.1. In some embodiments, the hardware components 104, 106 and 108 are only partially IEEE Standard1149.1 compliant and only some or none of the minimum instruction set is implemented. Hardware component 102 need not implement a TAP in accordance with IEEE Standard1 149.1itself but may act solely as a master driving communications with hardware components 104, 106 and 108 acting as TAPs using the IEEE Standard1149.1. Of course, hardware component 102 may also implement a TAP itself with separate TCK, TMS, TDI and TDO pins to be driven, for example for test purposes, by an additional hardware component, such as an external test hardware component. In some such embodiments, one or more (or all) of the TCK, TMS, TDO and TDI pins may be the same as a corresponding one of the CK, MS, O and I pins of hardware component 102 and component 102 may have a first mode in which it elicits responses from components 104, 106 and 108 and a second mode in which it acts as a TAP in a chain of TAPs and does not drive the TMS and TCK pins of these components. For example, component 102 may use the CK, MS and O pins as, respectively, as TCK, TMS and TDO pins in the second mode, have a separate TDI pin connected to the previous TAP in the chain and ceases to listen for responses on the I pin in the second mode.

Regardless of IEEE Standard1149.1 compliance of the instruction set or not, the hardware components 104, 106 and 108, in some embodiments, implement a custom ("process challenge") instruction to process a challenge in the data shift register 706 corresponding to the instruction (where applicable), to produce a response to the challenge and to write the response in the data shift register in place of the challenge. In some embodiments, described in further detail below, a further custom instructions holds a response ("process challenge hold"), selecting the same data shift register as the process challenge instruction without causing the data in that data shift register being processed. In some embodiments the IEEE Standard1149.1 BYPASS instruction and a corresponding single bit shift register are implemented and used.

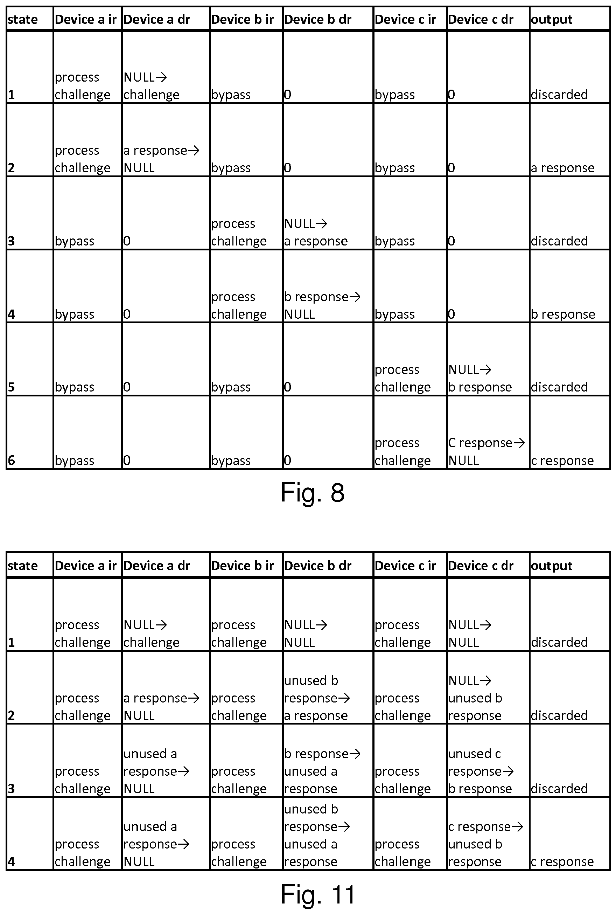

Device states of some embodiments implementing a process as described above with reference to Figures 5A and 5B (the hardware component 102 collecting responses from hardware components 104, 106, 108) using a configuration as described with reference to Figures 6 and 7 are now described with reference to Figure 8. In these embodiments, as described above, the challenge is sent to subsequent hardware components is the response received from a preceding hardware component but it will be appreciated that these embodiments are equally applicable to sending independent challenges to each hardware component by replacing the response from the preceding hardware component with an independent challenge.

In a first state, hardware component 102 shifts a process challenge instruction into the instruction register of hardware component 104 and a bypass instruction into the instruction registers of hardware components 106 and 108. Then the hardware component 102 shifts the challenge into the data register associated with the process challenge instruction in hardware component 104, with the bits consequently shifted out of hardware component 104 being shifted through the bypass data register of hardware components 106 and 108 and the output of the chain discarded by hardware component 102. The process challenge instruction then causes the hardware component 104 to produce a response as an output of function A and write it to the shift data register ("a response") during a transition to a second state.

In the second device state, the hardware component 102 shifts null or dummy data into the shift data register of hardware component 104 without changing the instruction in any of the hardware components to shift the response produced by hardware component 104 to the output of the chain where it is captured at I by hardware component 102. The hardware component 102 then shifts a bypass instruction into the instruction register of hardware component 104, in the process shifting the process challenge instruction from hardware component 104 to hardware component 106 and the bypass instruction from hardware component 106 to hardware component 108. The hardware component 102 further shifts the response it has received from the hardware component 104 in the second state into hardware component 106 via the bypass data shift register of hardware component 104, resulting in a third state of the device. In transitioning from the third to the fourth state, the hardware component 106 then produces a response and writes it to the data shift register associated with the process challenge instruction ("b response"). Analogous to the second state, in the fourth state the hardware component 102 then shifts the response from hardware component 106 back to its input I and proceeds analogously for hardware component 108 in the fifth and six state illustrated in Figure 8.

While the sequence of shifting instructions through the instruction registers is in some embodiments as described above, that is the process challenge instruction is shifted from one hardware component to the next so that all hardware components receive the same process challenge instructions, in other embodiments, some or all of the hardware components may have mutually different process challenge instructions and the size of the instruction register may vary between hardware components. In those embodiments, rather than shifting process challenge instructions from one hardware component to the next, each hardware component can receive its own particular process challenge instruction by accordingly shifting instruction bits from the hardware component 102 through the chain of hardware components.

It can be noted that in the second, fourth and sixth state, hardware component 104, 106 and 108, respectively, produces an unused response using the null or dummy data pushed into the data register while being loaded with the process challenge instruction. To prevent this, for example to enable an accurate response state to be maintained by the hardware components, a process challenge hold instruction as described above can be used in place of the process challenge instruction in the second, fourth and six state described above.

In place of using a process challenge hold instruction, in some embodiments, the data shift register associated with process challenge has an additional bit in addition to the bits for the challenge / response, indicating if the content of the data shift register is to be processed on updating the data shift register or not. Specifically, when the challenge including the additional bit is pushed into the data shift register for the first time, the additional bit is set to a value, say 1, indicating that the challenge is to be processed. On updating the data shift register, the hardware component reads the additional bit, determines from the value that the challenge is to be processed, processes the challenge and writes the response back to the data shift register, flipping the value of the additional bit. On the next update, then, if no new challenge has been pushed into the data shift register, the additional bit will remain at the flipped value and when the hardware component reads the data in the data shift register during the next update (with the process challenge instruction still in the instruction register), the processing of the challenge and writing of the response is suppressed by the hardware component in response to the flipped value of the additional bit being detected. It will, of course, be appreciated that other ways of keeping track of an internal process / do not process state are equally possible.

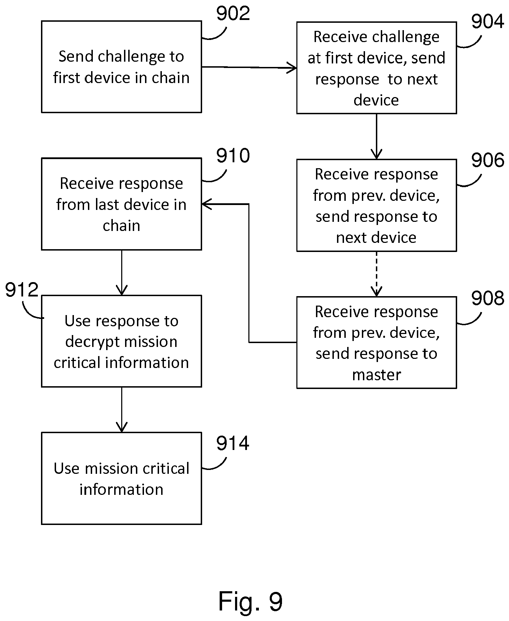

With reference to Figures 9, embodiments are now described in which a chain of challenge responses is elicited such that each response depends on all previous responses and the challenge. These embodiments can be implemented using any of the architectures described above with reference to figures 1A, 1B and 1C. For example, a response can be routed from hardware component 104 to hardware component 106, via the bus 110 (see Figure 1C) or directly from hardware component 104 to hardware component 106 (see figure 1A). The latter will be described in further detail below.

At step 902, a master, for example hardware component 102, sends a challenge to, for example, hardware component 104, the first hardware component in the chain. At step 904, hardware component 104 receives the challenge from hardware component 102, and produces a response, which is sent to the next hardware component in the chain, hardware component 106 in the present example. At step 906, the next hardware component in the chain receives the response from the previous hardware component in the chain (for example hardware component 106 receiving the response from hardware component 104), and produces its response, which is sent to the next hardware component. This is repeated until a last hardware component in the chain receives the response from the previous hardware component, and produces its response, which is sent back to the master (in this example hardware component 108 producing its response, which is sent to hardware component 102) at step 908.

At step 910, the master receives the response from the last hardware component in the chain and, at step 912 uses the response to decrypt mission-critical information, which is then used at step 914. As above, it will be appreciated that steps 912 and 114 can be replaced with any steps using the responses to verify device integrity, either at the master hardware component and/or a different hardware component in the data-processing device 100. Similarly, the responses may be produced in any of the ways described above.

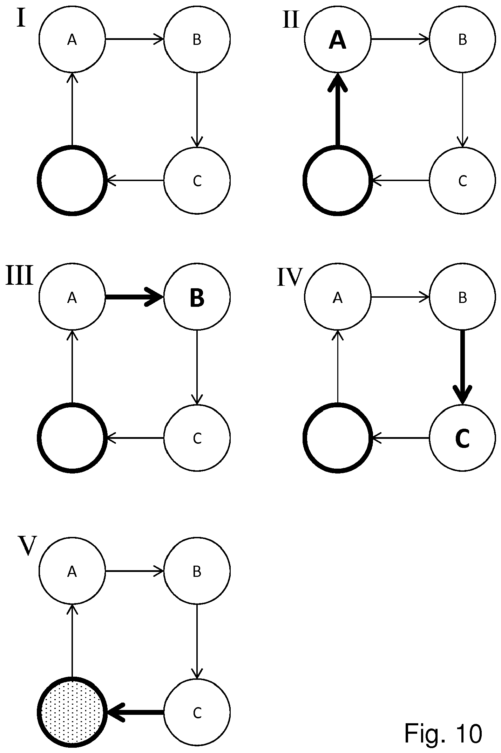

With reference to Figure 10, in some embodiments implementing the process described above with reference to Figure 9 in an architecture described above with reference to Figure 1A, the hardware component 102 acts as a master and hardware components 104, 108 and 110 implement respective challenge response functions A, B, C (I). Hardware component 102 sends a challenge to hardware component 104, which applies function A to the challenge to produce a response (II). The response is then sent from hardware component 104 to hardware component 106, which applies its response function B to the response received from hardware component 104 (III). The response produced by the response function B at hardware component 106 is then sent to hardware component 108, which applies its response function C to the received response (IV). The response produced by hardware component 108, which is dependent on the challenge and the responses from hardware components 104 and 106 is then sent to hardware component 102, where it is used (V).

In some embodiments, the embodiments just described with reference to Figure 10 are implemented using an arrangement of chained hardware components as described above with reference to Figure 7, based on shifting instruction and challenge/response data through the hardware components 104, 106 and 108. Operation of such embodiments is now described with reference to Figure 11. Specifically, in a first state of the device, a process challenge instruction is shifted into the instruction register of each hardware component 104, 106 and 108 and a challenge is shifted into the data shift register of hardware component 104, with dummy or null data shifted through the chain into the data shift registers of hardware components 106 and 108. In a transition from the first device state to a second device state, hardware component 104 produces its response and writes it to its data shift register. Since hardware components 106 and 108 also have the process challenge instruction loaded, they will produce a response to the data in the data shift register, although this is an unused response which is discarded as bits are shifted through the chain.

In a second device state, a sufficient number of bits is shifted into the data register of hardware component 104 to shift the response produced by hardware component 104 into the data shift register of hardware component 106. Similar as for hardware component 104, in a transition from the second device state to a third device state, hardware component 106 produces a response to the content of its data register (the response produced by hardware component 104) and writes it to its data register. In the third device state, a number of bits are again pushed into the device to move the response of hardware component 106 to the data register of hardware component 108, which then updates to write its response into its data register, subsequent to which, at device state four, a further number of bits is pushed into the chain to push the response produced by hardware component 108 to the output of hardware component 108 such that it can be captured at the I pin of hardware component 102 as the response of the chain of hardware components.

The approach described above with reference to Figure 11 has the advantage of simplicity in that the chain is loaded once with process challenge instructions which are then all executed each time a challenge/response moves from one hardware component to the next. However, this means that there are multiple repetitions of the execution of the process challenge instruction which are discarded. This may be undesirable where processing load on the hardware components in the chain is a concern, or where the hardware components need to maintain an internal state, for example to enforce execution of the process challenge hardware component only once in the boot cycle, or to make each subsequent response of any given hardware component dependent on one or more previous responses of that hardware component.

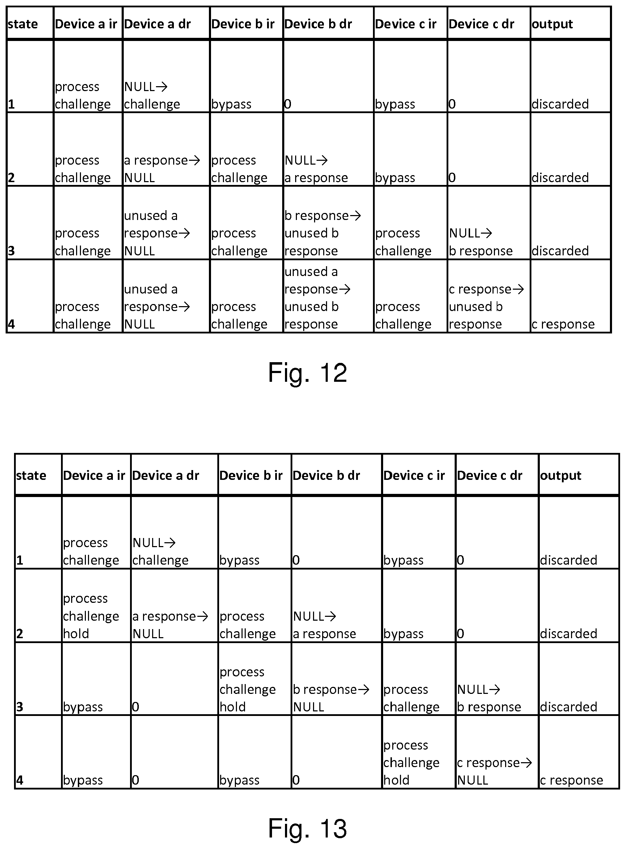

In one approach, now described with reference to Figure 12, the sequence of instructions is modified so that each hardware component does not execute a process challenge instruction before the corresponding data register is loaded with the response from the previous hardware component. To that end, the first device state discussed above with reference to Figure 11 is modified by loading only hardware component 104 (i.e. the first hardware component in the chain) with a process challenge instruction and loading hardware components 106 and 108 with a bypass construction, discussed above with reference to IEEE Standard1149.1.

In the second device state, a further process challenge instruction is shifted into the instruction register of hardware component 104, thereby shifting the process challenge instruction from hardware component 104 into the instruction register of hardware component 106. The response from hardware component 104 is shifted into the data shift register of hardware component 106, as before. Similarly, in the third device state, a further process challenge instruction is shifted into the chain of instruction registers, shifting the process challenge instruction from hardware component 106 into the instruction shift register of hardware component 108. The response from the data shift register of hardware component 106 is again shifted into the data shift register of hardware component 108. As a consequence, hardware component 104 produces its used (first) response in transitioning from state 1 to state 2, hardware component 106 produces its used (first) response in transitioning from state 2 to state 3 and, in transitioning from the third the fourth device state, hardware component 108 produces its used (first) response and writes it to its data register, which is then pushed out through the output of hardware component 108 to be captured at the I pin of hardware component 102 as the response of the chain in the fourth device state.

In a further approach, now described with reference to Figure 13, the sequence of instructions is modified so that each hardware component executes a process challenge instructions only once during transversal of a response through the chain. Specifically, the first device state is the same as described above with reference to Figure 12 but in the second device state a process challenge hold instruction is shifted into the instruction shift register of hardware component 104 in place of the process challenge instruction. The process challenge hold instruction selects the same data register as the process challenge instruction but causes no further effect. Shifting the process challenge hold instruction into the instruction shift register of hardware component 104 shifts the process challenge instruction from hardware component 104 into hardware component 106. In the third and fourth device states a bypass instruction is shifted into the instruction shift register of hardware component 104, each time shifting the adjacent process challenge hold and process challenge instructions further down the chain, as can be appreciated from an inspection of Figure 13.

In each device state after the first device state, a number of null or dummy bits are shifted into the data shift register of the first hardware component 104 to cause the challenge produced by the respective hardware component on transition from one state to do next to be shifted into the next hardware component, shifting the response from hardware component 104 into hardware component 106 in the second device state, from hardware component 106 to hardware component 108 in the third device state and from the hardware component 108 out to be captured at the I pin of hardware component 102 in the fourth device state. In this way, a process challenge instruction is only present in one hardware component at a time during a transition from one device state to the next, so that each hardware component in the chain only executes a process challenge instruction once as the challenge/response transitions through the chain.

It will be appreciated that, as in the embodiments described above, use of the process challenge hold instruction can be replaced with the addition of an additional bit to the data shift register, the additional bit indicating whether a response to the content of the data shift register should be produced and written to the data shift register, as described in detail above in respect of the embodiment described with reference to Figure 8. In embodiments that use the additional bit in the data shift register, a response will only be produced once irrespective of the instruction, until the additional bit is reset (to its value indicating that a response should be produced and written) by hardware component 102 pushing a new challenge including an appropriately set additional bit into one or more of the data shift registers.

Having read the above specific description of some embodiments, it will be apparent to the person skilled in the art that many variations, modifications and juxtaposition is of the embodiments and features described above are possible and will fall within the scope of the appended claims. In particular, it will be apparent that a number of approaches have been described to collect a response from a plurality of hardware components (individual responses or a response depending on the remaining responses), using any of the disclosed physical implementations and protocols. The response can be used in any of the various ways disclosed above, irrespective of how the response is collected or the infrastructure used for collecting the response.

## Claims

1. A data processing device (100) comprising a plurality of data processing hardware components (102, 104, 106, 108), the data processing hardware components comprising a first hardware component (102) and one or more remaining hardware components (104, 106, 108), wherein:
the hardware components are connected in a chain with an input of an initial remaining hardware component (104) in the chain connected to an output of the first hardware component; an input of each subsequent remaining hardware (106) component in the chain connected to an output of a respective preceding remaining hardware component in the chain; and an input of the first hardware component connected to an output of a last one of the remaining hardware components in the chain (108);
the first hardware component is configured to send a challenge to the input of the initial remaining hardware component in the chain;
each of the remaining hardware components in the chain is configured to receive a respective challenge at its input and to process the challenge to produce and send a response at an input of the next hardware component in the chain;
the first hardware component is configured to receive a response produced by the last remaining hardware component in the chain; and
the device is configured to verify the integrity of the device based on one or more responses produced by the one or more remaining hardware components.

2. A data processing device according to claim 1, comprising a memory storing mission critical information in encrypted form,
wherein the device or an aspect of the device requires the mission critical information in decrypted form to function, and
wherein the device is configured to decrypt the encrypted mission critical information using one or more device verification keys based on the one or more responses produced by the one or more remaining hardware components.

3. A data processing device according to claim 2, wherein the mission critical information comprises one or more of software; firmware required for the device or an aspect of the device to function; a BIOS; an operating system kernel; a hardware component driver; a boot loader; and a content decryption key.

4. A data processing device according to claim 2 or 3, wherein the data processing device comprises a conditional access device and the mission critical information comprises a decryption key for use by the conditional access device to control access to content consumable using the data processing device.

5. A data processing device according claim 1, wherein each of the remaining hardware components is configured to apply a non-transitive function to its challenge to produce its response.

6. A data processing device according to claim 1, wherein each remaining hardware component comprises:
an instruction shift register for receiving an instruction of a set of instructions, the set of instructions including at least a process challenge instruction to process a challenge and produce a response; and
a data shift register, corresponding to the process challenge instruction, for receiving a challenge,
wherein each remaining hardware component is configured to:
in a first mode, shift one bit at a time from its input into the instruction shift register and one bit at a time from the instruction shift register to its output;
in a second mode, shift one bit at a time from its input into the data shift register and one bit at a time from the data shift register to its output; and
in a third mode, when a process challenge instruction is in in the instruction shift register, read the challenge in the data shift register, process the challenge to produce a response and write the response to the data shift register,
wherein the first hardware component is configured to control the mode of the remaining hardware components to:
shift respective instructions into the instruction shift registers; shift challenges into the data shift registers;
cause the remaining hardware components to process the challenges to produce responses; and
shift responses out of the data shift registers, thereby receiving one or more responses from the remaining hardware components, and
wherein the first hardware component is configured to control the mode of all remaining hardware components together over a mode control line common to all remaining hardware components.

7. A data processing device according to claim 6, wherein the first hardware component is configured to cause:
a challenge to be shifted bit by bit into the data shift register of the initial remaining hardware component;
the initial remaining hardware component to process the challenge and write its response to its data shift register;
the response from the data shift register of the respective preceding hardware component in the chain to be shifted bit by bit into the data shift register of each subsequent remaining hardware component in the chain;
each subsequent hardware component to process the response from the respective preceding hardware component in its data shift register as its challenge to write its response to the data shift register; and
the response written to the respective data shift register of the last remaining hardware component in the chain to be shifted bit by bit to the input of the first hardware component.

8. A data processing device according claim 7, wherein the first hardware component is configured to cause a process challenge instruction to be executed by each subsequent remaining hardware component in the chain not before the respective preceding hardware component in the chain has been caused to write its response to its data register.

9. A data processing device according to claim 7, wherein the first hardware component is configured to cause each remaining hardware component in the chain to only execute a process challenge instruction once between shifting the challenge into the data shift register of the initial remaining hardware component in the chain and shifting the response written to the data shift register of the last remaining hardware component in the chain to the input of the first hardware component.

10. A data processing device as claimed in any preceding claim in which a physical layer used for implementing communications between the initial and remaining hardware components and between remaining hardware components is compliant with the IEEE- 1 149.1 (JTAG) specification, each remaining hardware component comprising a TMS, TCK, TDI and TDO pin and a specification compliant state machine.

11. A method of verifying the integrity of a data processing device according to claim 1, the method comprising:
sending (502, 902), by the first hardware component, a challenge to the input of the initial remaining hardware component in the chain;
receiving (904) by each of the remaining hardware components in the chain, a respective challenge at its input and processing the challenge to produce and send a response at an input of the next hardware component in the chain;
receiving (504, 910), at the input of first hardware component, a response produced by the last remaining hardware component in the chain;
using (512, 912), by the data processing device, one or more responses produced by the one or more remaining components to verify the integrity of the data processing apparatus.

12. A method according to claim 11, the method comprising using the response of the plurality of hardware components to decrypt information that is required in decrypted form for the operation of the device or an aspect of the device.

## Patentansprüche

1. Datenverarbeitungsvorrichtung (100), die eine Vielzahl von Datenverarbeitungshardwarekomponenten (102, 104, 106, 108) umfasst, wobei die Datenverarbeitungshardwarekomponenten eine erste Hardwarekomponente (102) und eine oder mehrere verbleibende Hardwarekomponenten (104, 106, 108) umfassen, wobei:
die Hardwarekomponenten in einer Kette verbunden sind, wobei ein Eingang einer anfänglichen verbleibenden Hardwarekomponente (104) in der Kette mit einem Ausgang der ersten Hardwarekomponente verbunden ist; ein Eingang jeder anschließenden verbleibenden Hardwarekomponente (106) in der Kette mit einem Ausgang einer jeweiligen vorausgehenden verbleibenden Hardwarekomponente in der Kette verbunden ist; und ein Eingang der ersten Hardwarekomponente mit einem Ausgang einer letzten der verbleibenden Hardwarekomponenten in der Kette (108) verbunden ist;
die erste Hardwarekomponente konfiguriert ist, eine Herausforderung zu dem Eingang der anfänglichen verbleibenden Hardwarekomponente in der Kette zu senden;
jede der verbleibenden Hardwarekomponenten in der Kette konfiguriert ist, eine jeweilige Herausforderung an ihrem Eingang zu empfangen und die Herausforderung zu verarbeiten, um eine Antwort zu erzeugen und an einen Eingang der nächsten Hardwarekomponente in der Kette zu senden;
die erste Hardwarekomponente konfiguriert ist, eine Antwort zu empfangen, die durch die letzte verbleibende Hardwarekomponente in der Kette erzeugt wurde; und
die Vorrichtung konfiguriert ist, die Integrität der Vorrichtung basierend auf einer oder mehreren Antworten zu verifizieren, die durch die eine oder die mehreren verbleibenden Hardwarekomponenten erzeugt wurden.

2. Datenverarbeitungsvorrichtung nach Anspruch 1, die einen Speicher umfasst, der missionskritische Informationen in verschlüsselter Form speichert,
wobei die Vorrichtung oder ein Aspekt der Vorrichtung die missionskritischen Informationen in entschlüsselter Form benötigt, um zu funktionieren, und
wobei die Vorrichtung konfiguriert ist, die verschlüsselten missionskritischen Informationen unter Verwendung eines oder mehrerer Vorrichtungsverifizierungsschlüssel basierend auf der einen oder den mehreren Antworten, die durch die eine oder die mehreren verbleibenden Hardwarekomponenten erzeugt wurden, zu entschlüsseln.

3. Datenverarbeitungsvorrichtung nach Anspruch 2, wobei die missionskritischen Informationen eines oder mehrere von Software; Firmware, die benötigt wird, damit die Vorrichtung oder einen Aspekt der Vorrichtung funktioniert; einem BIOS; ein Betriebssystem-Kernel; einem Hardwarekomponententreiber; einem Bootloader; und einem Inhaltsentschlüsselungsschlüssel umfassen.

4. Datenverarbeitungsvorrichtung nach Anspruch 2 oder 3, wobei die Datenverarbeitungsvorrichtung eine Vorrichtung für bedingten Zugriff umfasst und die missionskritischen Informationen einen Entschlüsselungsschlüssel zur Verwendung durch die Vorrichtung für bedingten Zugriff umfassen, um den Zugriff auf Inhalt zu steuern, der unter Verwendung der Datenverarbeitungsvorrichtung konsumierbar ist.

5. Datenverarbeitungsvorrichtung nach Anspruch 1, wobei jede der verbleibenden Hardwarekomponenten konfiguriert ist, eine nicht transitive Funktion an ihrer Herausforderung anzuwenden, um ihre Antwort zu erzeugen.

6. Datenverarbeitungsvorrichtung nach Anspruch 1, wobei jede verbleibende Hardwarekomponente umfasst:
ein Anweisungsschieberegister zum Empfangen einer Anweisung eines Anweisungssatzes, wobei der Anweisungssatz zumindest eine Herausforderungsverarbeitungsanweisung zum Verarbeiten einer Herausforderung und Erzeugen einer Antwort beinhaltet; und
ein Datenschieberegister, entsprechend der Herausforderungsverarbeitungsanweisung, zum Empfangen einer Herausforderung,
wobei jede verbleibende Hardwarekomponente konfiguriert ist zum:
in einem ersten Modus, Verschieben jeweils eines Bits von seinem Eingang in das Anweisungsschieberegister und jeweils eines Bits vom Anweisungsschieberegister zu seinem Ausgang;
in einem zweiten Modus, Verschieben jeweils eines Bits von seinem Eingang in das Datenschieberegister und jeweils eines Bits vom Datenschieberegister zu seinem Ausgang; und
in einem dritten Modus, wenn sich eine Herausforderungsverarbeitungsanweisung im Anweisungsschieberegister befindet, Lesen der Herausforderung im Datenschieberegister, Verarbeiten der Herausforderung, um eine Antwort zu erzeugen, und Schreiben der Antwort in das Datenschieberegister,
wobei die erste Hardwarekomponente konfiguriert ist, den Modus der verbleibenden Hardwarekomponenten zu steuern zum:
Verschieben jeweiliger Anweisungen in die Anweisungsschieberegister; Verschieben von Herausforderungen in die Datenschieberegister;
Bewirken, dass die verbleibenden Hardwarekomponenten die Herausforderungen verarbeiten, um Antworten zu erzeugen; und
Verschieben von Antworten aus den Datenschieberegistern, wodurch eine oder mehrere Antworten von den verbleibenden Hardwarekomponenten empfangen werden, und
wobei die erste Hardwarekomponente konfiguriert ist, den Modus aller verbleibenden Hardwarekomponenten zusammen über eine Modussteuerleitung zu steuern, die allen verbleibenden Hardwarekomponenten gemein ist.

7. Datenverarbeitungsvorrichtung nach Anspruch 6, wobei die erste Hardwarekomponente konfiguriert ist, Folgendes zu bewirken:
eine Herausforderung wird bitweise in das Datenschieberegister der anfänglichen verbleibenden Hardwarekomponente verschoben;
die anfängliche verbleibende Hardwarekomponente verarbeitet die Herausforderung und schreibt ihre Antwort in ihr Datenschieberegister;
die Antwort vom Datenschieberegister der jeweiligen vorausgehenden Hardwarekomponente in der Kette wird bitweise in das Datenschieberegister jeder anschließenden verbleibenden Hardwarekomponente in der Kette verschoben;
jede anschließende Hardwarekomponente verarbeitet die Antwort von der jeweiligen vorausgehenden Hardwarekomponente in ihrem Datenschieberegister als ihre Herausforderung, um ihre Antwort in das Datenschieberegister zu schreiben; und
die in das jeweilige Datenschieberegister der letzten verbleibenden Hardwarekomponente in der Kette geschriebene Antwort wird bitweise zu dem Eingang der ersten Hardwarekomponente verschoben.

8. Datenverarbeitungsvorrichtung nach Anspruch 7, wobei die erste Hardwarekomponente konfiguriert ist, zu veranlassen, dass eine Herausforderungsverarbeitungsanweisung durch jede anschließende verbleibende Hardwarekomponente in der Kette nicht ausgeführt wird, bevor veranlasst wurde, dass die jeweilige vorausgehende Hardwarekomponente in der Kette ihre Antwort in ihr Datenregister schreibt.

9. Datenverarbeitungsvorrichtung nach Anspruch 7, wobei die erste Hardwarekomponente konfiguriert ist, zu veranlassen, dass jede verbleibende Hardwarekomponente in der Kette eine Herausforderungsverarbeitungsanweisung nur einmal zwischen dem Verschieben der Herausforderung in das Datenschieberegister der anfänglichen verbleibenden Hardwarekomponente in der Kette und dem Verschieben der Antwort, die in das Datenschieberegister der letzten verbleibenden Hardwarekomponente in der Kette geschrieben wird, zu dem Eingang der ersten Hardwarekomponente ausführt.

10. Datenverarbeitungsvorrichtung nach einem vorstehenden Anspruch, bei der eine physikalische Schicht, die zum Implementieren von Kommunikationen zwischen der anfänglichen und verbleibenden Hardwarekomponenten und zwischen verbleibenden Hardwarekomponenten verwendet wird, mit der IEEE- 1 149.1 (JTAG)-Spezifikation konform ist, wobei jede verbleibende Hardwarekomponente einen TMS-, TCK-, TDI- und TDO-Pin und eine spezifikationskonforme Zustandsmaschine umfasst.

11. Verfahren zum Verifizieren der Integrität einer Datenverarbeitungsvorrichtung nach Anspruch 1, wobei das Verfahren umfasst:
Senden (502, 902), durch die erste Hardwarekomponente, einer Herausforderung zu dem Eingang der anfänglichen verbleibenden Hardwarekomponente in der Kette;
Empfangen (904), durch jede der verbleibenden Hardwarekomponenten in der Kette, einer jeweiligen Herausforderung an ihrem Eingang und Verarbeiten der Herausforderung, um eine Antwort zu erzeugen und an einen Eingang der nächsten Hardwarekomponente in der Kette zu senden;
Empfangen (504, 910), an dem Eingang der ersten Hardwarekomponente, einer Antwort, die durch die letzte verbleibende Hardwarekomponente in der Kette erzeugt wurde;
Verwenden (512, 912), durch die Datenverarbeitungsvorrichtung, einer oder mehrerer Antworten, die durch die eine oder die mehreren verbleibenden Komponenten erzeugt wurden, um die Integrität der Datenverarbeitungseinrichtung zu verifizieren.

12. Verfahren nach Anspruch 11, wobei das Verfahren Verwenden der Antwort der Vielzahl von Hardwarekomponenten zum Entschlüsseln von Informationen umfasst, die in entschlüsselter Form für den Betrieb der Vorrichtung oder eines Aspekts der Vorrichtung benötigt werden.

## Revendications

1. Dispositif de traitement de données (100) comprenant une pluralité de composants matériels (102, 104, 106, 108) de traitement de données, les composants matériels de traitement de données comprenant un premier composant matériel (102) et un ou plusieurs composants matériels (104, 106, 108) restants, dans lequel :
les composants matériels sont connectés en une chaîne, une entrée d'un composant matériel (104) restant initial dans la chaîne étant connectée à une sortie du premier composant matériel ; une entrée de chaque composant matériel (106) restant ultérieur dans la chaîne étant connectée à une sortie d'un composant matériel restant précédent respectif dans la chaîne ; et une entrée du premier composant matériel étant connectée à une sortie d'un dernier des composants matériels restants dans la chaîne (108) ;
le premier composant matériel est configuré pour envoyer un défi à l'entrée du composant matériel restant initial dans la chaîne ;
chacun des composants matériels restants dans la chaîne est configuré pour recevoir un défi respectif à son entrée et pour traiter le défi pour produire et envoyer une réponse au niveau d'une entrée du composant matériel suivant dans la chaîne ;
le premier composant matériel est configuré pour recevoir une réponse produite par le dernier composant matériel restant dans la chaîne ; et
le dispositif est configuré pour vérifier l'intégrité du dispositif sur la base d'une ou plusieurs réponses produites par les un ou plusieurs composants matériels restants.

2. Dispositif de traitement de données selon la revendication 1, comprenant une mémoire stockant des informations critiques de mission sous forme chiffrée,
dans lequel le dispositif ou un aspect du dispositif nécessite les informations critiques de mission sous forme déchiffrée pour fonctionner, et
dans lequel le dispositif est configuré pour déchiffrer les informations critiques de mission chiffrées en utilisant une ou plusieurs clés de vérification de dispositif sur la base des une ou plusieurs réponses produites par les un ou plusieurs composants matériels restants.

3. Dispositif de traitement de données selon la revendication 2, dans lequel les informations critiques de mission comprennent un ou plusieurs parmi un logiciel ; un micrologiciel requis pour le fonctionnement du dispositif ou d'un aspect du dispositif ; un BIOS ; un noyau de système d'exploitation ; un pilote de composant matériel ; un chargeur de démarrage ; et une clé de déchiffrement de contenu.

4. Dispositif de traitement de données selon la revendication 2 ou 3, dans lequel le dispositif de traitement de données comprend un dispositif d'accès conditionnel et les informations critiques de mission comprennent une clé de déchiffrement destinée à être utilisée par le dispositif d'accès conditionnel pour commander l'accès à un contenu consommable en utilisant le dispositif de traitement de données.

5. Dispositif de traitement de données selon la revendication 1, dans lequel chacun des composants matériels restants est configuré pour appliquer une fonction non transitive à son défi pour produire sa réponse.

6. Dispositif de traitement de données selon la revendication 1, dans lequel chaque composant matériel restant comprend :
un registre de décalage d'instructions pour recevoir une instruction d'un jeu d'instructions, le jeu d'instructions comportant au moins une instruction de traitement de défi pour traiter un défi et produire une réponse ; et
un registre de décalage de données, correspondant à l'instruction de traitement de défi, pour recevoir un défi,
dans lequel chaque composant matériel restant est configuré pour :
dans un premier mode, décaler un bit à la fois de son entrée dans le registre de décalage d'instructions et un bit à la fois du registre de décalage d'instructions à sa sortie ;
dans un deuxième mode, décaler un bit à la fois de son entrée dans le registre de décalage de données et un bit à la fois du registre de décalage de données à sa sortie ; et
dans un troisième mode, lorsqu'une instruction de traitement de défi est dans le registre de décalage d'instructions, lire le défi dans le registre de décalage de données, traiter le défi pour produire une réponse et écrire la réponse dans le registre de décalage de données, dans lequel le premier composant matériel est configuré pour commander le mode des composants matériels restants pour :
décaler des instructions respectives dans les registres de décalage d'instructions ;
décaler des défis dans les registres de décalage de données ;
amener les composants matériels restants à traiter les défis pour produire des réponses ; et
décaler les réponses hors des registres de décalage de données, recevant ainsi une ou plusieurs réponses des composants matériels restants, et
dans lequel le premier composant matériel est configuré pour commander le mode de tous les composants matériels restants ensemble sur une ligne de commande de mode commune à tous les composants matériels restants.

7. Dispositif de traitement de données selon la revendication 6, dans lequel le premier composant matériel est configuré pour amener :
un défi à être décalé bit par bit dans le registre de décalage de données du composant matériel restant initial ;
le composant matériel restant initial à traiter le défi et à écrire sa réponse dans son registre de décalage de données ;
la réponse du registre de décalage de données du composant matériel précédent respectif dans la chaîne à être décalée bit par bit dans le registre de décalage de données de chaque composant matériel restant ultérieur dans la chaîne ;
chaque composant matériel ultérieur à traiter la réponse du composant matériel précédent respectif dans son registre de décalage de données comme son défi pour écrire sa réponse dans le registre de décalage de données ; et
la réponse écrite dans le registre de décalage de données respectif du dernier composant matériel restant dans la chaîne à être décalée bit par bit à l'entrée du premier composant matériel.

8. Dispositif de traitement de données selon la revendication 7, dans lequel le premier composant matériel est configuré pour amener une instruction de traitement de défi à être exécutée par chaque composant matériel restant ultérieur dans la chaîne, pas avant que le composant matériel précédent respectif dans la chaîne n'ait été amené à écrire sa réponse dans son registre de données.

9. Dispositif de traitement de données selon la revendication 7, dans lequel le premier composant matériel est configuré pour amener chaque composant matériel restant dans la chaîne à n'exécuter une instruction de traitement de défi qu'une seule fois entre le décalage du défi dans le registre de décalage de données du composant matériel restant initial dans la chaîne et le décalage de la réponse écrite dans le registre de décalage de données du dernier composant matériel restant dans la chaîne à l'entrée du premier composant matériel.

10. Dispositif de traitement de données selon l'une quelconque des revendications précédentes dans lequel une couche physique utilisée pour mettre en œuvre des communications entre les composants matériels initiaux et restants et entre des composants matériels restants est conforme à la spécification IEEE-1 149.1 (JTAG), chaque composant matériel restant comprenant une broche TMS, TCK, TDI et TDO et une machine d'état conforme à la spécification.

11. Procédé de vérification de l'intégrité d'un dispositif de traitement de données selon la revendication 1, le procédé comprenant :
l'envoi (502, 902), par le premier composant matériel, d'un défi à l'entrée du composant matériel restant initial dans la chaîne ;
la réception (904) par chacun des composants matériels restants dans la chaîne, d'un défi respectif à son entrée et le traitement du défi pour produire et envoyer une réponse au niveau d'une entrée du composant matériel suivant dans la chaîne ;
la réception (504, 910), au niveau de l'entrée d'un premier composant matériel, d'une réponse produite par le dernier composant matériel restant dans la chaîne ;
l'utilisation (512, 912), par le dispositif de traitement de données, d'une ou plusieurs réponses produites par les un ou plusieurs composants restants pour vérifier l'intégrité de l'appareil de traitement de données.

12. Procédé selon la revendication 11, le procédé comprenant l'utilisation de la réponse de la pluralité de composants matériels pour déchiffrer des informations qui sont requises sous forme déchiffrée pour le fonctionnement du dispositif ou d'un aspect du dispositif.
